(19)

Europäisches
Patentamt

European
Patent Office

Office européen
des brevets

(11) EP 3 258 592 A1

(12) EUROPEAN PATENT APPLICATION

(43) Date of publication:
20.12.2017 Bulletin 2017/51

(51) Int Cl.:
H02P 9/48 (2006.01)   H02K 11/30 (2016.01)

(21) Application number: 16174883.5

(22) Date of filing: 17.06.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: ABB Schweiz AG
5400 Baden (CH)

(72) Inventors:
• Westerlund, Jan
  00380 Helsinki (FI)
• Pohjalainen, Janne
  00380 Helsinki (FI)
• Janhunen, Tuomas
  00380 Helsinki (FI)

(74) Representative: Kolster Oy Ab
(Salmisaarenaukio 1)
P.O. Box 204
00181 Helsinki (FI)

(54) AN ELECTRIC POWER SYSTEM

(57) The electric power system comprises a three phase (L1, L2, L3) AC generator (500) comprising a stator (200) with a stator winding (220), a prime mover (600) driving the generator and being operated in a first rotation speed range extending from 60% of the nominal rotation speed to a maximum rotation speed, a rectifier (700) converting a three phase AC output voltage of the generator into a DC voltage, and a main controller (800). A connection arrangement (550) is further provided for switching the connection of the stator winding (220) of the generator (500) between a star connection (S1) and a delta connection (D1). A first rotation speed (RS1) and a second rotation speed (RS2) is provided within the first rotation speed range. The stator winding is switched into the star connection when the rotation speed of the generator is increasing and reaches the first rotation speed value (RS1) and into the delta connection when the rotation speed of the generator is decreasing and reaches the second rotation speed value (RS2).

Fig. 3

## Description

FIELD

The invention relates to an electric power system.

BACKGROUND

Star and delta connections of the stator winding in three phase AC (Alternating Current) induction motors have been used for decades in order to reduce the starting current of the induction motor. The induction motor is started by connecting the stator winding of the induction motor into a star connection. The star connection of the stator winding is then changed to a delta connection when the induction motor has reached a rotation speed which is near the asynchronous rotation speed. The change between the star connection and the delta connection of the stator winding is done with switches. The switches may be manually or automatically operated. The starting current of the induction motor is reduced by approximately 30% in the star connection compared to the delta connection. The starting torque of the induction motor is naturally also reduced by 30% in the star connection. This means that the induction motor can be started in the star connection only if the required starting torque of the induction motor is small enough so that the induction motor can accelerate to a rotation speed near the asynchronous rotation speed before the star connection of the stator winding is changed into the delta connection.

Three phase AC generators on the other hand have traditionally been operated either in a star connection or in a delta connection. There has not been any need to change the connection of the stator winding during operation of the three phase AC generator. This is due to the fact that such three phase AC generators have normally been producing electric power to a three phase AC grid. The three phase AC generators have been operated with a constant rotation speed in order to keep the frequency of the three phase AC grid constant. Three phase AC grids have been the predominant solution in electrical power distribution for more than 100 years.

The situation is, however, changing slowly and there is a tendency to replace three phase AC grids with DC grids at least in some applications. There is a tendency to provide vessels having modern electric propulsion units with DC grids instead of traditional three phase AC grids. The use of an onboard DC grid in a vessel makes it possible to increase the efficiency by up to 20% and to reduce the footprint of electrical equipment by up to 30%. The onboard DC grid makes it possible to integrate and to combine different energy sources including renewables. The use of an onboard DC grid provides also for a greater flexibility in placing system components in the vessel design. An onboard DC grid allows the prime movers to run at a variable speed, whereby the fuel efficiency can be maximized at each load level. By far the largest proportion of the total power load on board a vessel is for propulsion and thrusters. This power must in an AC distribution network first be converted from AC to DC which is then fed as an input to the variable frequency inverter that performs the speed control of the motor. Distribution at a DC level allows the losses in a switchboard and transformer to be eliminated from this power flow. When diesel-electric generators run at a constant rotation speed in order to keep the frequency of the AC network constant, the fuel efficiency of the diesel engine is compromised. In a DC distribution system the generator and the diesel speed can be varied to achieve an optimum fuel efficiency at every power level.

Each power source and consumer on the onboard DC grid is an AC or DC "island" and the only connection between them is the DC bus. This means that each power source and consumer can be controlled and optimized independently. Complex interactions that can arise between units that share an AC connection will never occur. Consumers fed by the onboard DC grid are designed not to interact even under fault conditions.

In an onboard DC grid solution, energy storage may be included to improve the system's dynamic performance. Diesel engines are slow to handle large, quick load changes. By using batteries or super capacitors or flywheels to provided power for a short time, the vessel's control capabilities can be improved. Energy storage can also be used to absorb rapid power fluctuations seen by the diesel engines, thereby improving their fuel efficiency.

The onboard DC grid is an open power platform which easily allows reconfiguration in number and types of power sources and consumers, power levels and other modernizations during the lifetime of the vessel.

The power into the DC grid is produced by a set of three phase AC generators, whereby each generator is driven by a prime mover e.g. a diesel engine. The output of each three phase AC generator is connected via a rectifier to the DC grid. The three phase AC generator may be electromagnetically optimized only for a certain rotation speed. The electromagnetic performance of the generator will thus be reduced when the rotation speed of the generator changes. The prime mover may be operated within a rotation speed interval of 60% of the nominal rotation speed of the prime mover to a maximum rotation speed of the prime mover. This means that the three phase AC generator has to be electromagnetically optimized at the rotation speed of 60%. The three phase AC generator is thus used with maximum excitation at the rotation speed of 60% of the nominal rotation speed, but with a lower excitation at the rotation speed of 100% of the nominal rotation speed. The three phase AC generator is thus over dimensioned for the nominal rotation speed of the prime mover.

SUMMARY

An object of the present invention is to achieve an improved electric power system.

The electric power system according to the invention is defined in claim 1.

The electric power system comprises:

a prime mover driving the generator, said prime mover being operated in a first rotation speed range extending from a value of 60% of a nominal rotation speed of the prime mover to a maximum rotation speed of the prime mover,
a rectifier converting a three phase AC output voltage produced by the generator into a DC voltage,
a main controller controlling at least the generator, the rectifier, and the prime mover.

The electric power system is characterized in that:

a connection arrangement is provided for switching the connection of the stator winding of the generator between a star connection and a delta connection,
a first rotation speed value is provided within the first rotation speed range of the prime mover,
a second rotation speed value is provided within the first rotation speed range of the prime mover,
the main controller is arranged to control the connection arrangement to switch the stator winding into the star connection when the rotation speed of the generator is increasing and reaches the first rotation speed value and to switch the stator winding into the delta connection when the rotation speed of the generator is decreasing and reaches the second rotation speed value.

The maximum rotation speed of the prime mover may be 100% of the nominal rotation speed of the prime mover, but the prime mover may in some cases at least for short times be driven at a maximum rotation speed exceeding the nominal rotation speed.

The switching of the connection of the three phase AC stator winding between a star connection and a delta connection will make it possible to have the generator electromagnetically optimized at different rotation speeds of the prime mover. The ratio between the terminal voltage in the delta connection and in the star connection of the stator winding is:

$$\frac{1}{\sqrt{3}} = 0.58$$

This value is very near the value of the ratio 0.60 between the rotation speed of 60% of the nominal rotation speed of the prime mover and the nominal rotation speed of the prime mover.

The generator can thus be dimensioned electromagnetically optimally at the rotation speeds of 60% and 100% by changing the connection of the stator winding of the generator between the star and the delta connection.

A first rotation speed value within the first rotation speed range of the prime mover is defined in advance and provided to the main control system. A second rotation speed value within the first rotation speed range of the prime mover is further defined in advance and provided to the main control system.

The stator winding is connected into the star connection when the rotation speed of the generator is increasing and reaches the first rotation speed value and into the delta connection when the rotation speed of the generator is decreasing and reaches the second rotation speed value.

The electric power system according to the invention may be used in a vessel being provided with a DC grid. The DC grid may be a 1 kV DC grid and the generator used may be a high speed, low voltage generator. The rotation speed of the generator may be in the range of 1000 to 1800 rpm and the AC terminal voltage of the generator may be less than 1 kV.

There are typically several generators supplying electric power to the DC grid in a vessel. There are short term and long term variations in the demand of electric power in the vessel. The production capacity of the generators may be varied by varying the amount of generators in use and by varying the rotation speed of the generators in use. Short term variations may be handled by energy storage equipment connected to the DC grid such as batteries, super conductors and flywheels. Long term variations may be handled by varying the generator capacity by using only a part of the generators and/or by varying the rotation speed of the generators.

The electric power system according to the invention can also be used in a wind turbine park being provided with a DC grid.

The electric power system according to the invention can further be used in supplying a DC load without any grid.

The prime mover may be a combustion engine driven with any fuel, e.g. diesel, gas, renewables etc. The prime mover may also be a wind turbine, a hydro turbine etc.

The idea is to be able to optimize the efficiency of the prime mover as a function of the rotation speed and the saturation of the generator. Different sets of generator and prime mover combinations have often individual optimum values differing from the corresponding optimum values of other sets of generator and prime mover combinations.

DRAWINGS

In the following the invention will be described in greater detail by means of preferred embodiments with reference to the attached drawings, in which

Fig. 1 shows a longitudinal cross section of a generator,
Fig. 2 shows an electric power system,
Fig. 3 shows one possibility for connecting the generator in the electric power system between a star and a delta connection,
Fig. 4 shows the generator in a star connection,
Fig. 5 shows the generator in a delta connection.

DETAILED DESCRIPTION

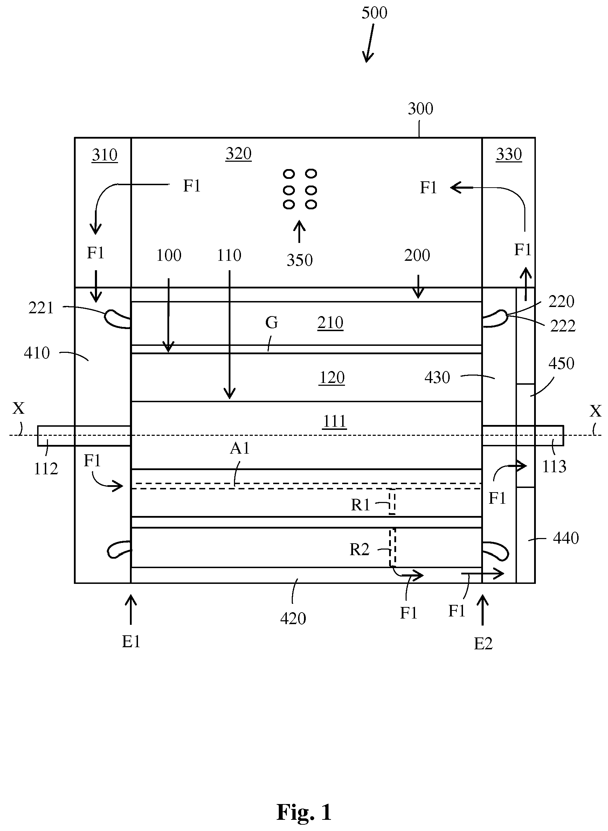

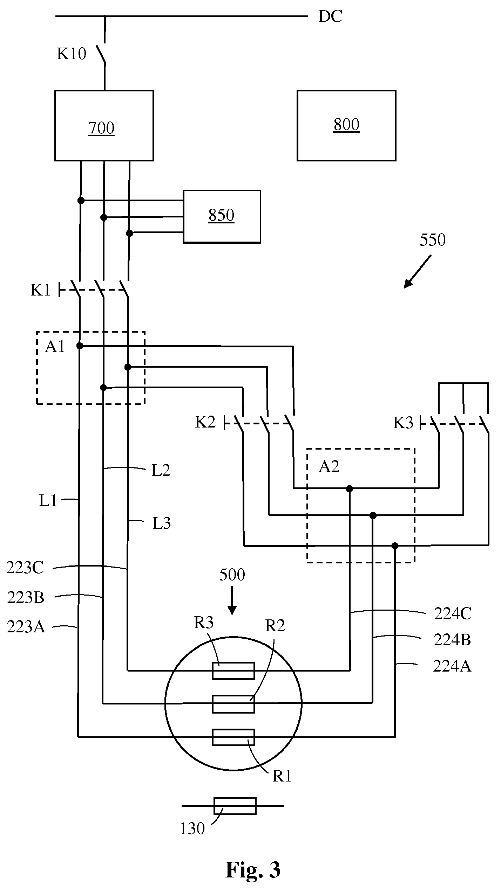

Figure 1 shows an axial cross section of a generator. The generator 500 comprises a cylindrical rotating rotor 100 and a cylindrical stationary stator 200 surrounding the rotor 100. The rotor 100 comprises a shaft 110 and a rotor core 120 with a rotor winding 130 (shown in the figure 3). The stator 200 comprises a stator core 210 with a stator winding 220.

The shaft 110 of the rotor 100 comprises a middle portion 111 and two opposite end portions 112, 113. The rotor core 120 surrounds the middle portion 111 of the shaft 110. The rotor core 120 comprises axial air channels A1 extending along the axial X-X length of the rotor core 120. The rotor core 120 comprises further first radial air channels R1 extending between the axial air channels A1 and the outer surface of the rotor core 120. The axial air channels A1 are open at a first end E1 of the rotor 100 and closed at a second end E2 of the rotor 100. The cooling of the generator 500 is thus asymmetrical as cooling air is directed into the axial air channels A1 only from the first end E1 of the rotor 100. The figure shows only one axial air channel A1, but there are a number of axial air channels A1 distributed evenly around the centre of the rotor 100.

The stator winding 220 is received in axial X-X slots provided in the inner surface of the stator core 210. A first end portion 221 of the stator winding 220 protrudes from a first end E1 of the stator core 210 and a second end portion 222 of the stator winding 220 protrudes from a second end E2 of the stator core 210. The stator core 210 comprises further second radial air channels R2 extending between the inner surface and the outer surface of the stator core 210. The ends of the stator winding 220 are all taken out on the first end E1 of the generator. The first end E1 of the generator may be the N-end of the generator i.e. the Non Drive End of the generator.

The figure shows also only one first radial air channel R1 and one second radial air channel R2, but there are a number of first radial air channels R1 and second radial air channels R2 distributed along the axial X-X length of the rotor 100.

There is an air gap G between the inner surface of the stator core 210 and the outer surface of the rotor core 120.

There may be an air cooler 300 located above the electric generator 500. The air cooler may comprise a first compartment 310 located above the first end E1 of the rotor 100, a second compartment 320 at the middle of the air cooler 300 and a third compartment 330 located above the second end E2 of the rotor 100. The second compartment 320 at the middle of the air cooler 300 may comprise cooling air pipes 350 extending in a traverse direction in relation to the axial direction X-X across the second compartment 320 of the air cooler 300. A primary air circulation may circulate cooling air through the cooling air pipes 350. The figure shows only six cooling air pipes 350, but there may be any number of cooling pipes 350 in the second compartment 320.

There may be an inlet air plenum 410 at the first end E1 of the generator 500 and a first outlet air plenum 420 surrounding the stator 200. There may further be a second outlet air plenum 430 located at the second end E2 of the generator 500 and a third outlet air plenum 440 located axially X-X outside the second outlet air plenum 430 at the second end E2 of the generator 500. There may be air flow passages between the inlet air plenum 410 and the first compartment 310 of the air cooler 300. The axial air channels A1 in the rotor 100 may open into the inlet air plenum 410 at the first end E1 of the generator 500. The second radial air channels R2 in the stator 200 may open into the first outlet air plenum 420. There may be air passages between the first outlet air plenum 420 and the second outlet air plenum 430 at the second end E2 of the generator 500. There may further be an air passage between the second outlet air plenum 430 and a third outlet air plenum 440. The third outlet plenum 440 may be provided with a radial fan 450 mounted on the end portion 113 of the shaft 110 of the generator 500. The air passage between the second outlet air plenum 430 and the third outlet air plenum 440 may be arranged through the radial fan 450. The radial fan 450 may suck air from the second outlet air plenum 430 into the centre of the radial fan 450 and blow the air from the circumference of the radial fan 450 into the third outlet air plenum 440. There may further be air passages between the third outlet air plenum 440 and the third compartment 330 in the air cooler 300.

The secondary air circulation may be an air circulation flowing in a closed loop between the air cooler 300 and the generator 500. Cooling air F1 may flow from the first compartment 310 of the air cooler 300 to the inlet air plenum 410, from the inlet air plenum 410 to the axial air channels A1 at the first end E1 of the rotor 100, from the axial air channels A1 to the first radial air channels R1 in the rotor 100, from the first radial air channels R1 in the rotor 100 to the air gap G between the rotor 100 and the stator 200, from the air gap G to the second radial air channels R2 in the stator 200, from the second radial air channels R2 in the stator 200 to the first outlet air plenum 420 surrounding the stator 200, from the first outlet plenum 420 to the second outlet plenum 430 at the second end E2 of the rotor 100, from the second outlet plenum 430 to the middle portion of the radial fan 450 in the third outlet air plenum 440, from the circumference of the radial fan 450 to the third outlet air plenum 440, from the third outlet plenum 440 to the third compartment 330 in the air cooler 300 and from the third compartment 330 in the air cooler 300 through the second compartment 320 in the air cooler 300 to the first compartment 310 in the air cooler 300. The cooling air flow F1 is cooled when it passes across the cooling air pipes 350 in the second compartment 320 in the air cooler 300.

Cooling air F1 may thus be directed from the second outlet air plenum 430 to the suction side of the radial fan 450 and from the pressure side of the radial fan 450 to the air cooler 300. The cooling air F1 may thus be directed from the pressure side of the radial fan 450 back to the inlet air plenum 410. The cooling air F1 may be directed from the pressure side of the radial fan 450 directly back to the inlet air plenum 410 in a case where there is no air cooler 300. A return flow path is then needed to direct the cooling air F1 from the pressure side of the radial fan 450 to the inlet air plenum 410.

Cooling air F1 may thus be directed to the axial air channels A1 from the first end E1 of the rotor 100. The cooling air F1 flows in the axial air channels A1 towards to opposite second axial end E2 of the rotor 100. Cooling air F1 is deviated to the first radial air channels R1 as the cooling air flow F1 propagates towards the second end E2 of the rotor 100. The axial air channels A1 are closed at the second end E2 of the rotor 100. This means that all the cooling air flow F1 that flows into the axial air channels A1 will be divided to the first radial air channels R1 along the axial X-X length of the rotor 100.

The secondary air circulation is in the figure shown as an air circulation flowing in a closed loop between the air cooler 300 and the generator 500. It would naturally also be possible to arrange the secondary air circulation as an open air circulation without an air cooler 300. External air could be sucked into the generator 500 from the first end E1 of the generator 500 and blown out from the second end E2 of the generator 500.

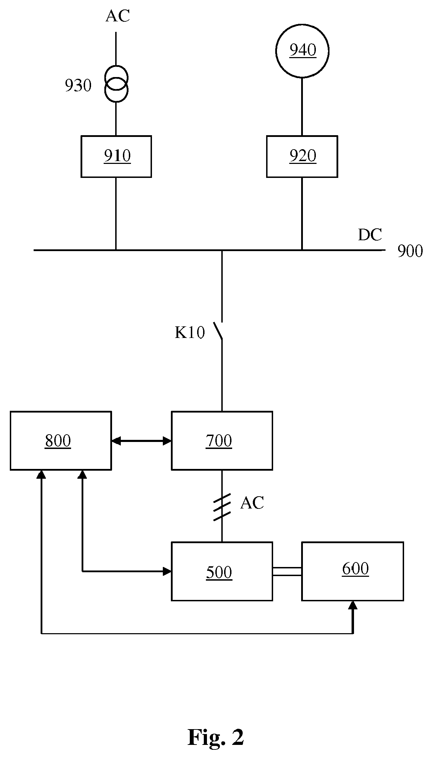

Fig. 2 shows an electric power system. The electric power system comprises a prime mover 600 driving a three phase AC generator 500, a rectifier 700 converting the three phase AC voltage produced by the generator into a DC voltage, a main controller 800, a DC grid, and AC and DC consumers connected to the DC grid. The shaft of the generator 500 is connected mechanically either directly or through a transmission to the shaft of the prime mover 600. The prime mover 600 drives the generator 500. The rotation speed of the generator 500 depends linearly on the rotation speed of the prime mover 600. The generator 500 produces a three phase AC voltage in the output terminals of the generator 500. The output terminals of the generator 500 are connected to input terminals of the rectifier 700. The rectifier converts the three phase AC output voltage of the generator 500 into a DC voltage. The DC voltage at the output of the rectifier 700 is connected via a switch K10 to a DC grid 900. The DC grid 900 is used to distribute electric power to consumers being connected to the DC grid 900. AC consumers may be connected to the DC grid 900 via an inverter 910 and a transformer 930. The inverter 910 converts the DC into a three phase AC and the transformed 930 forms an electrical isolation between the DC grid 900 and the AC consumers. Three phase electrical motors 940 can also be connected to the DC grid 900 via inverters 920 converting the DC voltage into a three phase AC voltage. DC consumers may further be connected to the DC grid 900. The main controller 800 controls the generator 500, the rectifier 700 and the prime mover 600. The main controller 800 may receive measurement information from the generator 500, the rectifier 700, and the prime mover 600. The DC grid 900 may be a DC distribution grid in a vessel.

Fig. 3 shows one possibility for connecting the generator in the electric power system between a star and a delta connection.

The three phase AC generator 500 comprises a stator winding 220 having three phases L1, L2, L3 and a rotor winding 130. The reference signs R1, R2, R3 denote the resistances of the respective phase of the stator winding. Both ends 223A, 223B, 223C, 224A, 224B, 224C of each phase R1, R2, R3 in the stator winding 220 are taken out from the stator 200 and wired to a connection space positioned outside the stator core 210. A first end 223A, 223B, 223C of the phases R1, R2, R3 of the stator winding 220 are wired to first connection terminals A1 positioned in the connection space and a second end 224A, 224B, 224C of the phases R1, R2, R3 of the stator winding 220 are wired to second connection terminals A2 positioned in the connection space. A first switch K1 is connected between the first connection terminals A1 and the input terminals of the inverter 700. The output of the inverter 700 is connected via a DC switch K10 to the DC grid. The output voltages of the generator 500 are fed to an automatic voltage control AVR 850 which controls the output voltage of the generator 500. This is done by controlling the excitation of the rotor winding 130. The main controller 800 controls the components in the power producing system. The connection space may be arranged e.g. in the air cooler 300 or in a separate connection box attached to the frame of the generator 500.

The electric power system comprises further a connection arrangement 550 making it possible to connect the stator winding 220 into a star connection and into a delta connection. The connection arrangement 550 comprises a wiring, a second switch K2 and a third switch K3. The second switch K2 is connected between the first connection terminals A1 and the second connection terminals A2. The first side of the third switch K3 is connected to the second connection terminals A2 and the opposite second side of the third switch K3 is short circuited. The stator winding is connected in a star connection when the third switch K3 is closed and the second switch K2 is open. The stator winding is connected in a delta connection the second switch K2 is closed and the third switch K3 is open. The first switch K1 is the main switch connecting and disconnecting the generator 500 to and from the inverter 700 and thereby to and from the DC grid 900. The switches K1, K2, K3 are operated by the main controller 800. The rotation speed of the generator 500 and/or the rotation speed of the prime mover 600 is measured and fed to the main controller 800. The switches K1, K2, K3 may be line breakers or based on semiconductor switches. The semiconductor switches could be realized as a separate switch for each phase.

The generator 500 may be electromagnetically optimized only for a certain rotation speed. The electromagnetic performance of the generator 500 will thus be reduced when the rotation speed of the generator 500 changes. A prime mover 600 may be operated within a rotation speed interval of 60% of the nominal rotation speed of the prime mover 600 to a maximum rotation speed of the prime mover 600. This means that the generator has to be electromagnetically optimized at the rotation speed of 60%. The generator is thus used with maximum excitation at the rotation speed of 60% of the nominal rotation speed, but with a lower excitation at the maximum rotation speed of the prime mover 600. The generator is thus over dimensioned for the maximum rotation speed of the prime mover 600.

The alternation of the connection of the stator winding of the generator 500 between a star connection and a delta connection will make it possible to have the generator electromagnetically optimized at the rotation speed of 60% and at the rotation speed of 100% of the nominal rotation speed of the prime mover 600. The ratio between the terminal voltage in the delta connection and in the star connection is:

$$\frac{1}{\sqrt{3}} = 0.58$$

This value is very near to the value of the ratio 0.60 between the rotation speed 60% and the rotation speed 100% of the nominal rotation speed of the prime mover 600.

The generator 500 can thus be dimensioned electromagnetically optimally at the rotation speeds 60% and 100% by changing the connection of the stator winding between the delta and the start connection.

A first rotation speed value RS1 within the first speed range of the prime mover 600 is defined and provided to the main control unit 800. A second rotation speed value RS2 within the first speed range of the prime mover 600 is further defined and provided to the main control unit 800.

The stator winding 220 is connected into the star connection S1 when the rotation speed of the generator 500 is increasing and reaches the first rotation speed value RS1 and into the delta connection D1 when the rotation speed of the generator 500 is decreasing and reaches the second rotation speed value RS2.

The first rotation speed value RS1 and the second rotation speed value RS2 may have the same value or they may have a different value within the first rotation speed range of the prime mover 600. The first rotation speed value RS1 and the second rotation speed value RS2 may be defined to be in the range of 60% to 100%, preferably in the range of 70% to 90%, and more preferably in the range of 80% of the nominal rotation speed of the prime mover 600.

The rotor winding 130 of the generator 500 is excited with a DC current produced by an exciter system. The exciter system can be based on a rotating exciter or on a static exciter. The magnetic field and thereby the output voltage of the generator 500 is controlled with the AVR 850 which controls the DC excitation current fed to the rotor winding 130. The DC excitation current of the rotor 100 of the generator 500 for the star S1 and delta D1 connected stator winding 220 will be different, but is not a dominant design criteria. The magnitude of the DC exciting current is more dependent on the load of the generator 500 than on the connection of the stator winding 220.

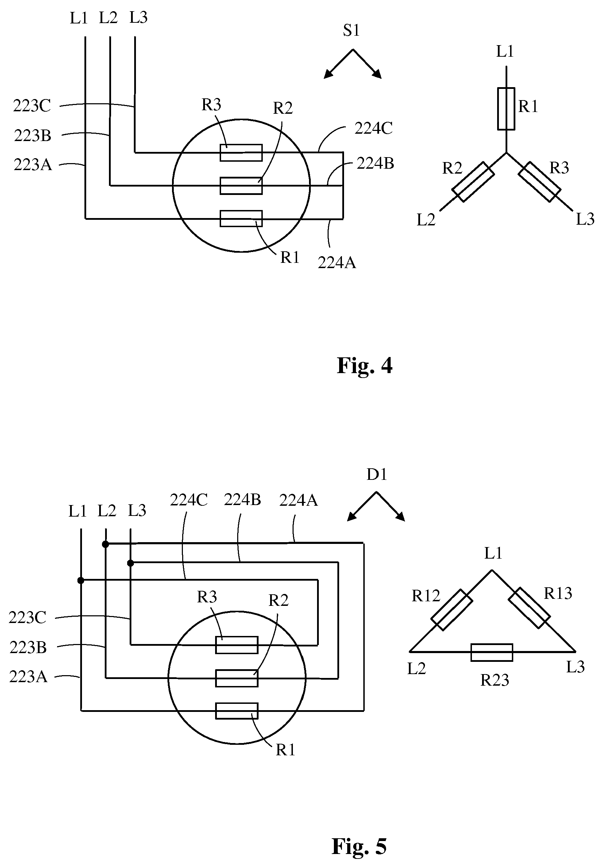

Fig. 4 shows the generator in a star connection. The left side of the figure shows the star connection in figure 2 when the third switch K3 is closed and the second switch K2 is open and the right hand side of the figure shows the star connection drawn in the star format. The second ends 224A, 224B, 224C of all phases R1, R2, R3 of the stator winding 220 are connected together to form the star point in the connection. The first ends 223A, 223B, 223C of the phases R1, R2, R3 of the stator winding 220 are connected to output terminals of the generator 500 in respective phases L1, L2, L3.

Fig. 5 shows the generator in a delta connection. The left side of the figure shows the delta connection in figure 2 when the second switch K3 is closed and the third switch K3 is open and the right hand side of the figure shows the delta connection drawn in the delta format. The second end 224A of the first phase R1 in the stator winding 220 is connected to the first end 223B of the second phase R2 in the stator winding 220, the second end 224B of the second phase R2 in the stator winding 220 is connected to the first end 223C of the third phase R3 in the stator winding, and the second end 224C of the third phase R3 in the stator winding 220 is connected to the first end 223A of the first phase R1 in the stator winding 220. The first ends 223A, 223B, 223C of the phases R1, R2, R3 of the stator winding 200 are connected to output terminals of the generator 500 in respective phases L1, L2, L3. The resistances in the delta connection are:

$$R12 = R1 + R2 + \frac{R1 * R2}{R3}$$

$$R23 = R2 + R3 + \frac{R2 * R3}{R1}$$

$$R13 = R1 + R3 + \frac{R1 * R3}{R2}$$

The alternation of the connection of the stator winding 220 of the generator 500 between a star connection and a delta connection will make it possible to have the generator electromagnetically optimized at the nominal rotation speed and at the rotation speed of 60% of the nominal rotation speed. The generator 500 will thus be electromagnetically optimized at the same points as the prime mover 600.

The generator 500 is advantageously a synchronous generator with a power of at least 500 kW, preferably at least 1 MW. The advantage of the use of the star-delta connection is greater in big generators. Over dimensioning of a big generator is expensive.

The rectifier 700 may be a separate entity or it could be integrated into the generator 500. The rectifier 700 could e.g. be positioned within the air cooler 300 of the generator 500. The rectifier 700 may be a passive rectifier 700 as the output voltage of the generator 500 may be regulated with the DC excitation current of the rotor 100 of the generator 500. The regulation of the output voltage of the generator 500 i.e. the input voltage of the rectifier 700 will affect the DC output voltage of the rectifier 700. The rectifier 700 may on the other hand be an active rectifier 700, whereby the lead angle of the rectifier 700 is regulated. A greater lead angle leads to a smaller DC voltage and vice a versa.

It will be obvious to a person skilled in the art that, as the technology advances, the inventive concept can be implemented in various ways. The invention and its embodiments are not limited to the examples described above but may vary within the scope of the claims.

**Claims**

1. An electric power system comprising:

   a three phase (L1, L2, L3) AC generator (500) comprising a rotor (100) with a rotor winding (130), and a stator (200) with a stator winding (220),
   a prime mover (600) driving the generator (500), said prime mover (600) being operated in a first rotation speed range extending from a value of 60% of a nominal rotation speed of the prime mover (600) to a maximum rotation speed of the prime mover (600),
   a rectifier (700) converting a three phase (L1, L2, L3) AC output voltage produced by the generator (500) into a DC voltage,
   a main controller (800) controlling at least the generator (500), the rectifier (700), and the prime mover (600),

   **characterized in that**:

   a connection arrangement (550) is provided for switching the connection of the stator winding (220) of the generator (500) between a star connection (S1) and a delta connection (D1),
   a first rotation speed value (RS1) is provided within the first rotation speed range of the prime mover (600),
   a second rotation speed value (RS2) is provided within the first rotation speed range of the prime mover (600),
   the main controller (800) is arranged to control the connection arrangement (550) to switch the stator winding (220) into the star connection (S1) when the rotation speed of the generator (500) is increasing and reaches the first rotation speed value (RS1) and to switch the stator winding (220) into the delta connection (D1) when the rotation speed of the generator (500) is decreasing and reaches the second rotation speed value (RS2).

2. An electric power system according to claim 1, **characterized in that** a first end (223A, 223B, 223C) of each phase (L1, L2, L3) of the stator winding (220) is connected to a respective connection point in a first output terminal (A1) and a second end (224A, 224B, 224C) of each phase (L1, L2, L3) of the stator winding (220) is connected to a respective connection point in a second output terminal (A2), said first output terminal (A1) and said second output terminal (A2) being arranged in a connection space.

3. An electric power system according to claim 2, **characterized in that** each of the connection points in the second output terminal (A2) are connected to respective connection points at a first side of a third switch (K3), whereby each of the connection points at a second side of the third switch (K3) are short circuited to form the star point in the star connection (S1) of the stator winding (220).

4. An electric power system according to claim 3, **characterized in that** each of the connection points in the second output terminal (A2) is further connected via a second switch (K2) to a respective connection point in the first output terminal (A1) so that the second end (223A) of the first phase (L1) in the stator winding (220) is connected to the first end of the second phase (L2) in the stator winding (200), the second end (223B) of the second phase (L2) in the stator winding (220) is connected to the first end of the third phase (L3) in the stator winding (220), and the second end (223C) of the third phase (L3) in the stator winding (220) is connected to the first end of the first phase (L1) in the stator winding (220), whereby the stator winding (220) becomes connected in the delta connection (D1).

5. An electric power system according to claim 4, **characterized in that** the connection points in the third output terminal (A3) are connected to respective connection points in an input terminal of the rectifier (700).

6. An electric power system according to claim 5, **characterized in that** a first switch (K1) is connected between the first output terminal (A1) and input terminals of the rectifier (700).

7. An electric power system according to any one of claims 1 to 6, **characterized in that** the first rotation speed value (RS1) is selected to be in a range of 60% to 100% of the nominal rotation speed of the prime mover (600).

8. An electric power system according to any one of claims 1 to 6, **characterized in that** the first rotation speed value (RS1) is selected to be in a range of 70% to 90% of the nominal rotation speed of the prime mover (600).

9. An electric power system according to any one of claims 1 to 6, **characterized in that** the first rotation speed value (RS1) is selected to be 80% of the nominal rotation speed of the prime mover (600).

10. An electric power system according to any one of claims 1 to 9, **characterized in that** the second rotation speed (RS2) is selected to be in a range of 60% to 100% of the nominal rotation speed of the prime mover (600).

11. An electric power system according to any one of claims 1 to 9, **characterized in that** the second rotation speed value (RS2) is selected to be in a range of 70% to 90% of the nominal rotation speed of the prime mover (600).

12. An electric power system according to any one of claims 1 to 9, **characterized in that** the second rotation speed value (RS2) is selected to be 80% of the nominal rotation speed of the prime mover (600).

13. An electric power system according to any one of claims 1 to 12, **characterized in that** the prime mover (600) is a combustion engine.

14. An electric power system according to any one of claims 1 to 13, **characterized in that** the rectifier (700) feeds a DC grid.

**Fig. 1**

AC

930

940

910

920

DC

900

K10

800

700

AC

500

600

**Fig. 2**

DC

K10

700

800

850

550

K1

A1

K2

K3

A2

L2

L1

L3

223C

500

223B

224C

223A

R3    R2

224B

224A

R1

130

**Fig. 3**

L1 L2 L3

S1

223C

223B

223A

R3    R2

224C

224B

224A

R1

L1

R1

R2    R3

L2    L3

**Fig. 4**

D1

L1 L2 L3    224C 224B 224A

223C

223B

223A

R3    R2

R1

L1

R12    R13

L2    L3
R23

**Fig. 5**

**Europäisches Patentamt**

**European Patent Office**

**Office européen des brevets**

# DECLARATION

which under Rule 63 of the European Patent Convention EP 16 17 4883 shall be considered, for the purposes of subsequent proceedings, as the European search report

Application Number

| The Search Division considers that the present application, does not comply with the provisions of the EPC to such an extent that it is not possible to carry out a meaningful search into the state of the art on the basis of all claims<br><br>Reason: | CLASSIFICATION OF THE APPLICATION (IPC)<br><br>INV.<br>H02P9/48<br>H02K11/30 |
|---|---|

1) The search examiner is of the opinion that the statement in the response of the applicant pursuant to Rule 63(2) EPC is not sufficient to overcome the deficiency.

2) In the description on page 4, lines 24 - 27, on page 11, lines 9 - 13 and in claim 1 it is defined that the main controller (800) is arranged to control the connection arrangement (550) to switch the stator winding (220) into the star connection (S1) when the rotation speed of the generator (500) is increasing and reaches the first rotation speed value (RS1) and to switch the stator winding (220) into the delta connection (D1) when the rotation speed of the generator (500) is decreasing and reaches the second rotation speed value (RS2).

2.1) The search examiner understands this definition as a hysteresis in which the first rotational speed RS1 is higher than the second rotational speed RS2. When the speed is low, the stator windings are delta connected. When the speed increases to RS1 the windings are switched into star connection. When the speed is decreased to RS2, which is lower than RS1, the windings are connected in delta connection again. Furthermore the search examiner understands from the application, that with this strategy the voltage at the output of the generator should be held more or less constant when the speed of the prime mover varies.

This is however not clear to the search examiner. As indicated in the description on page 4, lines 10 - 13, the ratio between the terminal voltage in the delta connection and in the star connection of

-/--

| Place of search | Date | Examiner |
|---|---|---|
| Munich | 2 February 2017 | Frapporti, Marc |

EPO FORM 1504 (P04F37)

page 1 of 4

Europäisches
Patentamt

European
Patent Office

Office européen
des brevets

**DECLARATION**

Application Number

which under Rule 63 of the European Patent Convention EP 16 17 4883
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|

Reason:

the stator winding is 0,58. That means:
Udelta = 0,58 x Ustar
Thus Udelta is lower than Ustar .
It is therefore not clear why the stator windings should be switched in delta connection, in a situation when the speed and with it the output voltage is low, to further decrease the voltage. On the other side it is also not clear why the stator windings should be switched in star connection, in a situation when the speed and with it the output voltage is high, to further increase the voltage.
2.2) In his response dated 16-01-2017, the applicant argued:
" For an electrical machine it is important to utilize the full potential of the iron core for the magnetic flux without saturating the iron core too much. The relation between flux, voltage and frequency/speed can be expressed as follows:
flux =voltage / (2 * pi * f) = voltage / (2 * pi * speed * pole pairs / 60)
where:
voltage = voltage in the machine terminals
pi = 3.14159...
speed = rotational speed 1/min
pole pairs = 2 * number of poles in the electrical machine
From the equation one can see that if you want to keep the flux constant in a situation where the speed decreases, also the voltage must be deceased. "
2.3) The search examiner is of the opinion, that the induced voltage at the stator windings depends on the excitation flux and the speed of the rotor. Therefore, the voltage has no influence on
-/--

| Place of search | Date | Examiner |
|---|---|---|
| Munich | 2 February 2017 | Frapporti, Marc |

Europäisches
Patentamt

European
Patent Office

Office européen
des brevets

**DECLARATION**

Application Number

which under Rule 63 of the European Patent Convention EP 16 17 4883
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason: | |

the excitation flux of the rotor.
3) In addition the meaning of the feature "delta connection" in claim 1 is considered to be not clear (Article 84 EPC).
3.1) In Fig.5 the connection of the windings R1, R2 and R3 shown in the left drawing is a delta connection of the windings R1, R2 and R3 and not a delta connection of windings R12, R13, R23, shown in the right drawing.
Furthermore the formula indicated on page 12 for R12, R23 and R13 is not understood.
The search examiner is of the opinion, that for a delta connection of R1, R2 and R3 the resistance between L1 and L2 is :
R12 = (R1 x (R2 + R3)) / (R1 + R2 + R3)
3.2) The applicant argued that to his understanding the calculation of the resistances in the delta connection on page 12, lines 14-21 was correct and referred to the Wikipedia article to be found on the link:
https://en.wikipedia.org/wiki/Y-%CE%94 transform
3.3) The search examiner is of the opinion, that this article does not concern star-delta connections of an electrical machine and how the impedance between two lines (L1, L2) changes, when the windings of a generator is switched from a star to a delta connection. In fact the wikipedia article concerns the mathematical star - delta transformation, in which for a network having three inputs (A, B, C) and three resistances connected in star, the values of the resistances are calculated for a corresponding network in which the resistances are connected in

-/--

EPO FORM 1504 (P04F37)

| Place of search | Date | Examiner |
|---|---|---|
| Munich | 2 February 2017 | Frapporti, Marc |

Europäisches
Patentamt

European
Patent Office

Office européen
des brevets

**DECLARATION**

Application Number

which under Rule 63 of the European Patent Convention EP 16 17 4883
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | **CLASSIFICATION OF THE APPLICATION (IPC)** |
|---|---|

Reason:

delta. This has however nothing to do with
the star - delta connection of the
windings in an electrical machine, in
which the resistances of the windings
themselves do not change.
4) As a result, the application does not
comply with the requirement of clarity
under Article 84 EPC. The lack of clarity
is such that a meaningful search of the
whole claimed subject-matter of claims 1 -
14 can not be carried out (Rule 63 EPC).

The applicant's attention is drawn to the
fact that a search may be carried out
during examination following a declaration
of no search under Rule 63 EPC, should the
problems which led to the declaration
being issued be overcome (see EPC
Guideline C-IV, 7.2).

2

EPO FORM 1504 (P04F37)

| Place of search | Date | Examiner |
|---|---|---|
| Munich | 2 February 2017 | Frapporti, Marc |

page 4 of 4